# DEMANDE DE BREVET EUROPEEN

(11) **EP 0 542 590 A1**
(43) Date de publication de la demande: **19.05.1993**
(21) Numéro de dépôt: 92402891.3
(22) Date de dépôt: 26.10.1992
(51) Int. Cl.: G01L 5/13, B64F 1/26

(54) **Installation d'essais au sol pour les réacteurs d'un aéronef grosporteur**

(30) Priorité: 06.11.1991 FR 9113696
(71) Demandeur: S.A: André Boet Société Anonyme dite:, F-59650 Villeneuve d'Ascq (FR)
(72) Inventeur: Boet, Jean-Paul, F-59650 Villeneuve d'Ascq (FR)
(74) Mandataire: Bonnetat, Christian

(57) **Abrégé**

- La présente invention concerne une installation d'essais au sol pour les réacteurs (5A,5B) d'un aéronef (2) gros-porteur équipé d'au moins deux réacteurs liés aux ailes de l'aéronef, comportant, pour chaque réacteur (5A,5B), un silencieux (8A,8B) présentant un corps de forme générale cylindrique allongé, lesdits silencieux étant destinés à être disposés, chacun, derrière la tuyère d'un desdits réacteurs.
- Selon l'invention, cette installation comprend un caisson (6) acoustiquement isolant et perméable à l'air, destiné à envelopper au moins la partie avant du fuselage (3) et les ailes (4A,4B) de l'aéronef (2), et dont la paroi arrière (7A,7B) est reliée à la partie d'extrémité avant de chacun desdits silencieux (8A,8B).

## Description

La présente invention concerne une installation d'essais au sol pour les réacteurs d'un aéronef gros-porteur équipé d'au moins deux réacteurs liés aux ailes de l'aéronef.

Aux différents stades de la construction et/ou de la maintenance d'un aéronef, des essais doivent être effectués au sol sur le ou les réacteurs équipant ledit aéronef. De tels essais, réalisés sur une aire de point fixe prévue à cet effet, provoquent des nuisances liées principalement au bruit engendré par le ou les réacteurs testés à différents régimes de fonctionnement. Pour réduire le niveau de bruit au voisinage d'un aéronef dont le ou les réacteurs sont testés, différentes solutions ont été envisagées.

Une première solution consiste à disposer, derrière la tuyère du réacteur à tester, un silencieux dit "de refoulement" présentant un corps de forme générale cylindrique allongé. Quoique donnant satisfaction, de tels silencieux laissent la possibilité à une certaine quantité d'énergie riche en basses fréquences de diffuser latéralement en limitant ainsi la réduction, susceptible d'être atteinte, du niveau sonore. Par ailleurs, le bruit engendré à l'avant du réacteur, c'est-à-dire "à l'aspiration", se révèle aussi important que le bruit engendré à l'arrière ("au refoulement"), avec cependant une différence de tonalité : haute fréquence à l'aspiration, basse fréquence au refoulement.

En outre, la modification de la direction des vents, en cours d'essai ou entre deux essais, entraîne une variation des résultats obtenus et parfois même des risques de pompage et instabilités aérodynamiques au niveau des compresseurs et, donc, de mauvais fonctionnement du ou des réacteurs, en interdisant dans certaines conditions les essais. Dans le cas de rafales de vent, le risque d'endommagement du réacteur n'en est que plus important.

Pour surmonter ces difficultés, on a imaginé d'effectuer de tels essais dans un hangar, permettant d'isoler l'aéronef de l'environnement extérieur. Toutefois, si une telle solution est tout à fait réaliste pour des aéronefs de petite taille, tels que des avions de chasse, les dimensions nécessaires d'un tel hangar deviennent trop importantes voire prohibitives pour un aéronef gros-porteur.

La présente invention a pour but d'éviter ces inconvénients, et concerne une installation d'essais au sol pour les réacteurs d'un aéronef gros-porteur, adaptée pour tirer parti de la souplesse d'utilisation de la première solution décrite ci-dessus, tout en évitant, à la fois, ses inconvénients propres et ceux liés à la construction d'un bâtiment dont les dimensions et le coût, pour un tel type d'aéronef, peuvent, dans certains cas, être considérés comme rédhibitoires.

A cet effet, l'installation d'essais au sol pour les réacteurs d'un aéronef gros-porteur équipé d'au moins deux réacteurs liés aux ailes de l'aéronef, du type comportant, pour chaque réacteur, un silencieux présentant un corps de forme générale cylindrique allongé, lesdits silencieux étant destinés à être disposés, chacun, derrière la tuyère d'un desdits réacteurs, est remarquable, selon l'invention, en ce qu'elle comprend un caisson acoustiquement isolant et perméable à l'air, destiné à envelopper au moins la partie avant du fuselage et les ailes de l'aéronef, et dont la paroi arrière est reliée à la partie d'extrémité avant de chacun desdits silencieux.

Ainsi, ledit caisson ceinturant toute la partie avant de l'aéronef permet de limiter à un minimum les fuites acoustiques, en obtenant une performance acoustique homogène tout autour de l'installation, en coopération avec lesdits silencieux, et, cela, sans qu'il soit nécessaire de construire des hangars dont le coût et les dimensions, pour les aéronefs gros-porteurs, seraient, comme déjà indiqué, considérés comme rédhibitoires. De plus, les effets du vent sont totalement éliminés grâce au caisson, ce qui permet d'effectuer les essais pratiquement par tous les temps.

Conformément à un premier exemple de réalisation de l'invention, ledit caisson est constitué de deux demi-caissons mobiles l'un par rapport à l'autre pour permettre l'entrée de l'aéronef dans ledit caisson et sa sortie de celui-ci, chacun desdits demi-caissons étant solidaire d'au moins un silencieux.

Avantageusement, lesdits demi-caissons sont mobiles l'un par rapport à l'autre transversalement à l'axe longitudinal X-X de ladite installation.

En particulier, le déplacement desdits demi-caissons peut être assuré par des roues porteuses et motrices, reliées audit caisson, susceptibles de se déplacer sur des rails.

En revanche, conformément à un second exemple de réalisation de l'invention, ledit caisson est formé en une seule pièce, et ladite paroi arrière du caisson est constituée de deux moitiés de paroi solidaires, chacune, d'au moins un silencieux, et déplaçables latéralement pour permettre l'entrée (ou la sortie) de l'aéronef dans ledit caisson.

Par ailleurs, chacun desdits silencieux est équipé de moyens de roulement.

De préférence, les parois du caisson sont constituées de structures en profilés, sur lesquels sont fixés des panneaux acoustiquement isolants.

Avantageusement, la paroi avant, ainsi que le plafond, au moins dans sa partie avant, du caisson comportent une pluralité d'ouvertures facilitant l'entrée dans le caisson de l'air nécessaire à l'alimentation des réacteurs et de l'air entraîné par effet de trompe. La partie avant du caisson est ainsi la plus perméable possible en limitant la dépression dans le caisson et en permettant une alimentation en air des réacteurs la plus naturelle possible.

En particulier, lesdites ouvertures peuvent se présenter sous la forme de cheminées rectangulaires, éventuellement munies de grilles de protection contre l'entrée de corps étrangers (oiseaux, etc ...). Ces cheminées peuvent être également cylindriques et disposées en forme de nid d'abeilles permettant une intégration de la structure du plafond dans le matériau absorbant.

Par ailleurs, pour permettre la libre circulation autour des réacteurs et au personnel de service d'intervenir notamment pour des réglages, la partie inférieure du caisson est équipée d'un plancher en caillebotis, dans la première réalisation.

Les figures du dessin annexé feront bien comprendre comment l'invention peut être réalisée. Sur ces figures, des références identiques désignent des éléments semblables.

La figure 1 est une vue de dessus d'un premier exemple de réalisation de l'installation d'essais au sol selon l'invention, en position de service.

La figure 2 est une vue de face, selon la flèche II, de l'installation de la figure 1.

La figure 3 est une vue en coupe longitudinale, selon la ligne III-III, de l'installation de la figure 1.

La figure 4 est une vue en perspective d'un demi-caisson, et de son silencieux, de l'installation illustrée par les figures 1 à 3.

La figure 5 est une vue de dessus, avec arrachement partiel, du premier exemple de réalisation de l'installation d'essais au sol selon l'invention, dans la position hors service.

La figure 6 est une vue de dessus montrant l'installation dans la position permettant l'entrée (ou la sortie) de l'aéronef.

La figure 7 est une vue de dessus d'un second exemple de réalisation de l'installation d'essais au sol selon l'invention.

La figure 8 est une vue de face, selon la flèche VIII, de l'installation de la figure 7.

La figure 9 est une vue en coupe longitudinale, selon la ligne IX-IX, de l'installation de la figure 7.

Les deux exemples de réalisation décrits de l'installation selon l'invention sont adaptés pour effectuer des essais au sol sur les réacteurs d'un aéronef gros-porteur équipés de deux réacteurs. Toutefois, il est bien entendu que l'aéronef sur lequel sont effectués les essais pourrait comporter plus de deux réacteurs (par exemple quatre), en prévoyant dans l'installation un nombre correspondant de silencieux de refoulement.

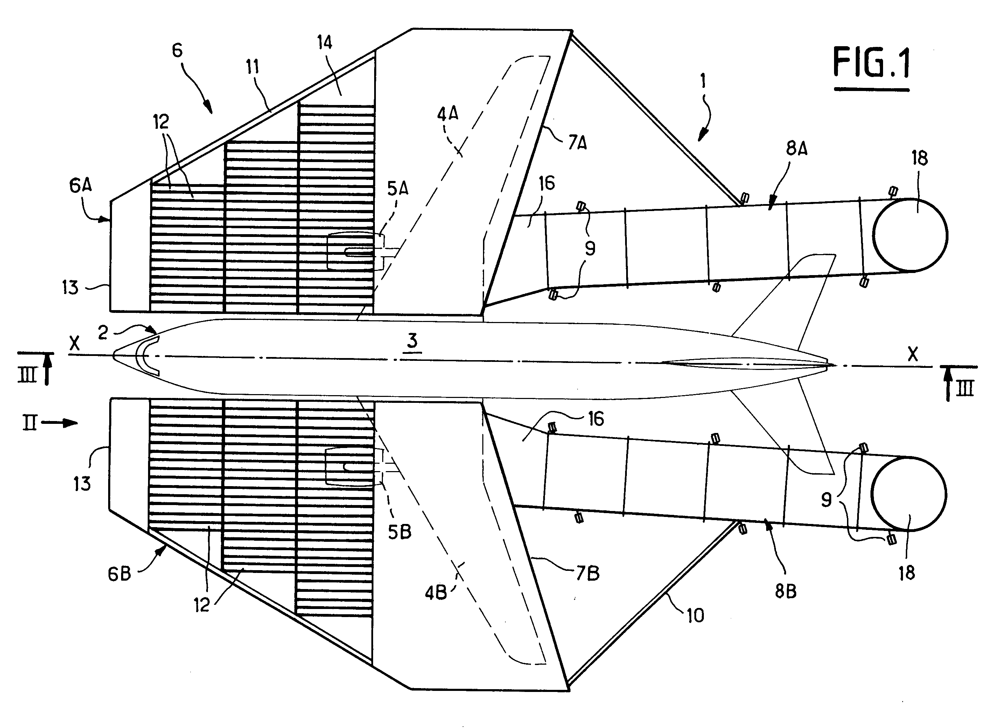

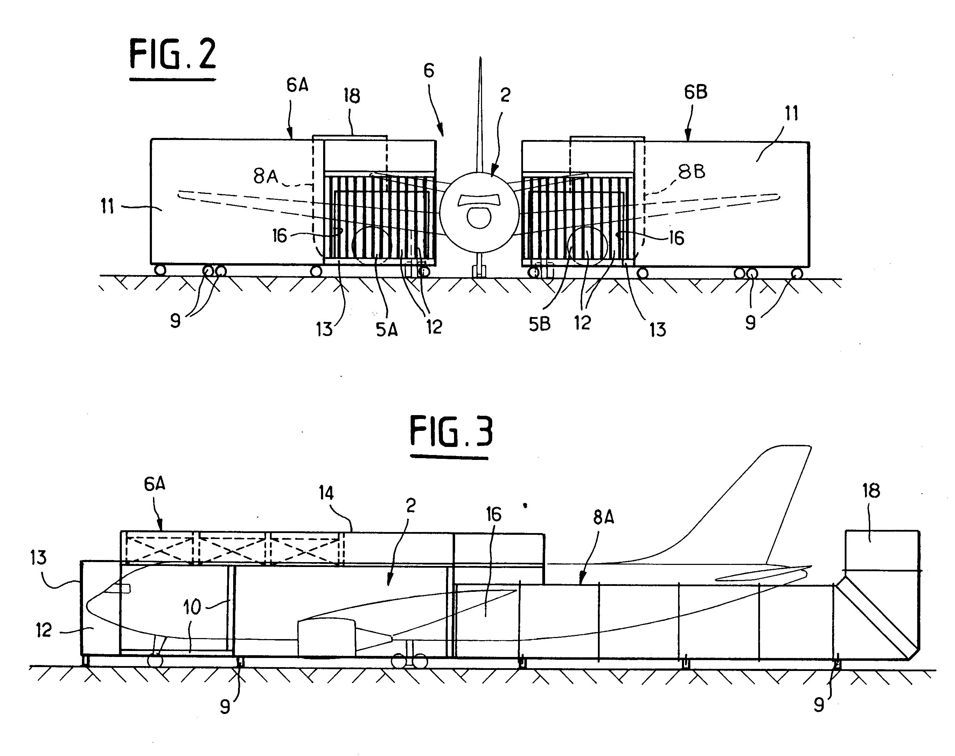

Un premier exemple de réalisation de l'installation selon l'invention est illustré par les figures 1 à 6.

Comme on le voit sur ces figures, et notamment sur la figure 1, l'installation 1 d'essais au sol pour les réacteurs d'un aéronef gros-porteur 2, lequel présente un fuselage 3 orienté selon l'axe longitudinal X-X de l'installation et une paire d'ailes 4A,4B portant chacune un réacteur 5A,5B, comporte un caisson 6 acoustiquement isolant et perméable à l'air, destiné à envelopper la partie avant du fuselage 3 et les ailes 4A,4B de l'aéronef 2, et constitué, dans cet exemple de réalisation, de deux demi-caissons 6A,6B. La paroi arrière 7A,7B de chaque demi-caisson 6A,6B (étant bien entendu que l'"avant" du caisson correspond à l'avant de l'aéronef qui y est agencé) est reliée à la partie d'extrémité avant d'un silencieux 8A,8B dit de refoulement, présentant un corps de forme générale cylindrique allongé, lesdits silencieux 8A,8B étant destinés à être disposés, chacun, derrière la tuyère du réacteur 5A,5B correspondant, lorsque l'installation est en service.

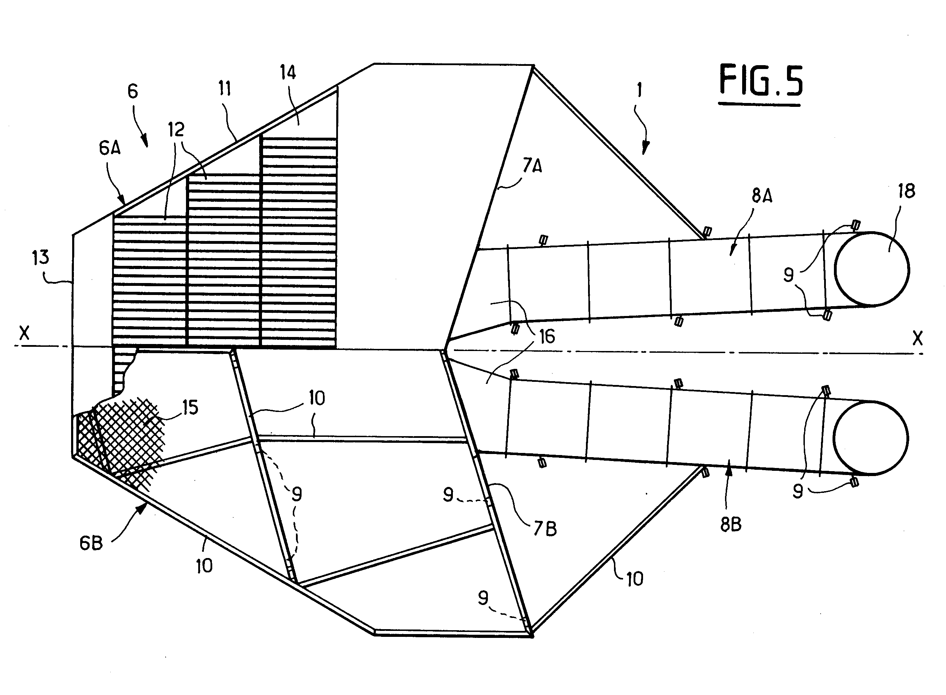

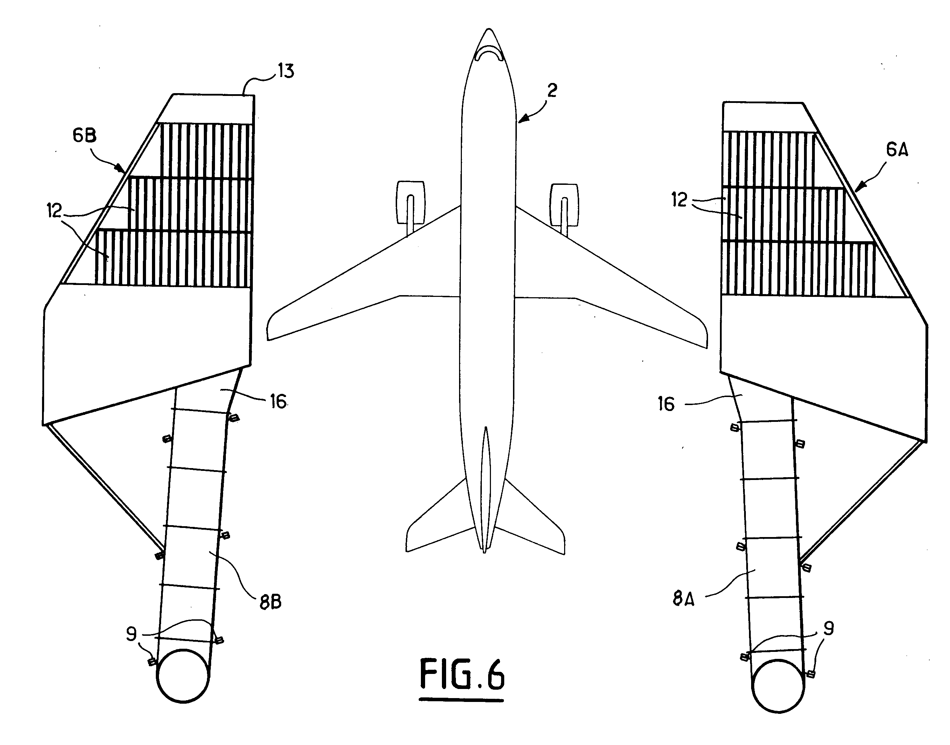

Par ailleurs, les deux demi-caissons 6A,6B, ainsi que les silencieux 8A,8B qui y sont liés, sont mobiles transversalement à l'axe longitudinal X-X de l'installation 1, et cela pour permettre l'entrée de l'aéronef 2 dans le caisson 6 et sa sortie de celui-ci, comme l'illustrent plus particulièrement les figures 5 et 6. Comme déjà indiqué, la figure 5 montre l'installation dans la position de repos ou hors service, dans laquelle son encombrement est minimal, les deux demi-caissons 6A,6B formant un ensemble fermé. Au contraire, dans la position ouverte de la figure 6, l'aéronef 2 peut aisément entrer dans l'installation, ou en sortir, éventuellement par l'avant. On remarquera que, en service (figure 1), il peut demeurer un espace plus ou moins important entre les deux demi-caissons 6A,6B (bien qu'un agencement fermé puisse également être envisagé si les dimensions de l'aéronef le permettent), sans pour cela nuire, bien entendu, à l'isolation acoustique procurée par le caisson 6.

Le déplacement des demi-caissons 6A,6B, ainsi que des silencieux 8A,8B, est assuré par des roues 9 porteuses et, au moins pour certaines d'entre elles, motrices, susceptibles de se déplacer sur des rails (non représentés) , et pouvant utiliser soit de l'énergie hydraulique, soit de l'énergie électrique.

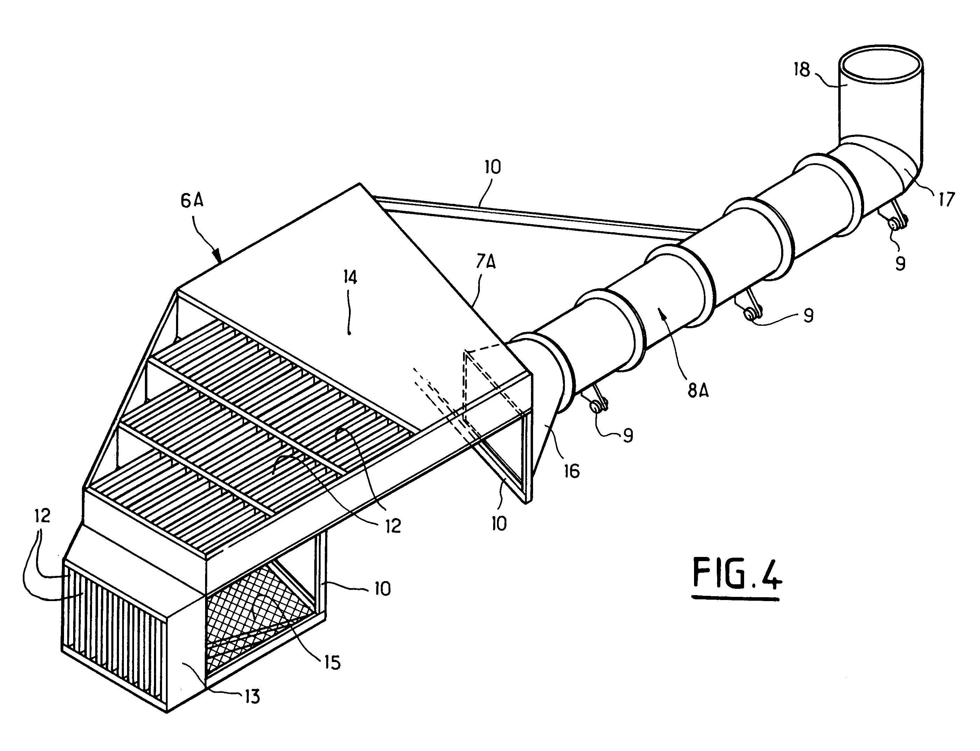

Par ailleurs, les parois du caisson 6 sont constituées de structures en profilés 10, sur lesquels sont fixés des panneaux acoustiquement isolants 11. L'air nécessaire à l'alimentation des réacteurs, ainsi que l'air entraîné par effet de trompe pénètrent dans le caisson 6 au moyen d'une pluralité d'ouvertures, se présentant avantageusement sous la forme de cheminées rectangulaires 12, prévues dans la paroi avant 13, ainsi que dans le plafond 14, du caisson 6, comme on le voit mieux sur la figure 4. Comme déjà indiqué, ces ouvertures limitent la dépression dans le caisson en cours d'essai et permettent une alimentation en air des réacteurs la plus naturelle possible. A la place de cheminées rectangulaires (ou éventuellement cylindriques et disposées en forme de nid d'abeilles permettant une intégration de la structure du plafond dans le matériau absorbant) équipées de dispositifs internes (non représentés) du type panneaux acoustiques ou noyaux ou anneaux acoustiques, on pourrait également prévoir, intégrés aux éléments de cloison, des "trous" insonorisés ou des "persiennes" insonorisées. De plus, pour éviter l'entrée de corps étrangers dans le caisson, des grilles de protection (non représentées) peuvent être prévues pour lesdites ouvertures 12 d'entrée d'air.

Pour permettre la libre circulation autour des réacteurs, et l'intervention du personnel de service, la partie inférieure du caisson est équipée d'un plancher en caillebotis 15 (figures 4 et 5).

Chaque silencieux de refoulement 8A,8B est du type classique avec, à l'entrée, une pièce de raccordement 16 fixée à la paroi arrière 7A,7B du caisson 6 et adaptée, grâce à son positionnement et à son dimensionnement, pour pouvoir capter les flux de gaz brûlés ainsi que les débits d'air induits par effet de trompe, quel que soit le type de réacteur en fonctionnement. La position de l'axe de chacun des silencieux est déterminée en tenant compte des plus forts débits de gaz et d'air, ainsi que pour permettre le soufflage des gaz et de l'air dans le silencieux avec un angle minimal par rapport à l'axe longitudinal du silencieux.

De plus, chaque silencieux est tapissé intérieurement de matériaux absorbant le son, avec ou sans noyau ou anneau acoustique, afin de réduire les bruits de l'échappement. Les gaz brûlés sont éjectés, à la sortie, par l'intermédiaire d'un coude 17 et d'une cheminée 18. L'angle de déflection du coude peut être de 90° ou de 135° en fonction des conditions du site, de la direction et de la force des vents dominants, entre autres.

Les silencieux reposent sur une structure métallique permettant leur déplacement latéral, tout comme les demi-caissons, en dégageant un espace suffisant pour autoriser le passage de l'aéronef avant et après chaque essai, ainsi qu'une adaptation à chaque type d'aéronef.

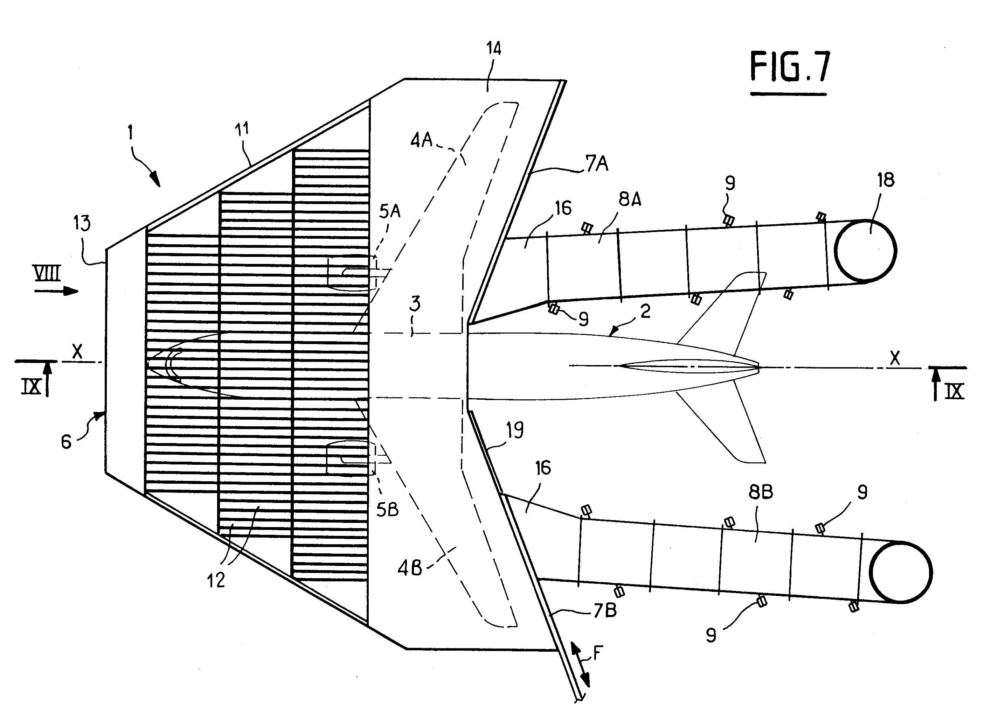

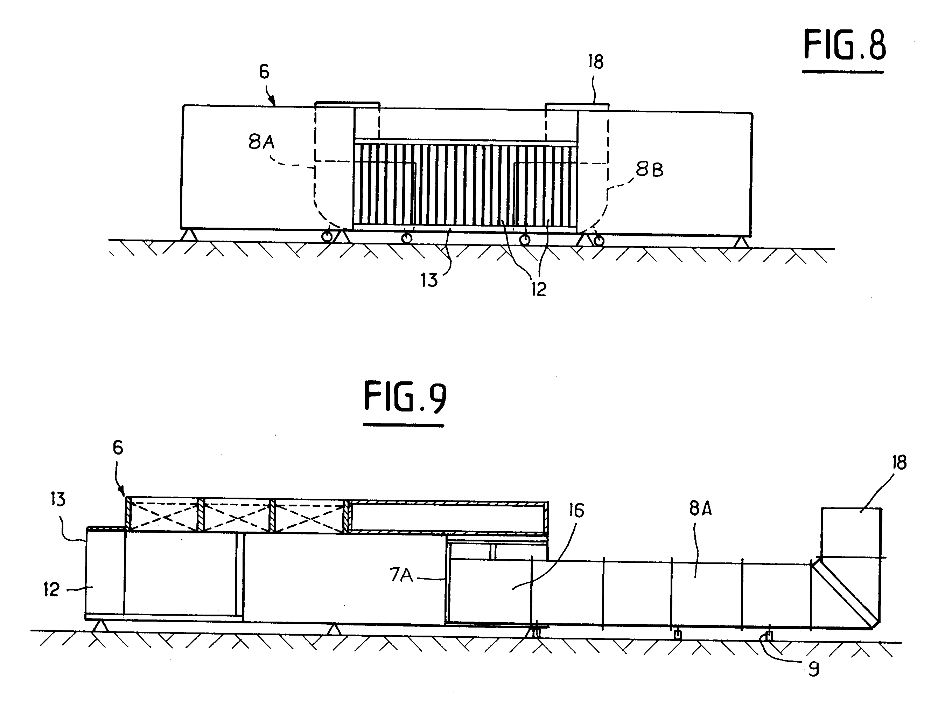

Le second exemple de réalisation de l'invention est illustré par les figures 7 à 9. Sur ces figures, les mêmes éléments constitutifs sont désignés par les mêmes références numériques que celles du premier exemple de réalisation décrit ci-dessus, et on ne reviendra pas en détail sur la description de ces éléments communs. Il suffit de dire que, comme dans le cas précédent, l'installation 1 comprend un caisson 6 acoustiquement isolant et perméable à l'air, destiné à envelopper la partie avant du fuselage 3 et les ailes 4A,4B de l'aéronef 2, dont les réacteurs 5A,5B doivent être soumis à des essais au sol, caisson dont la paroi arrière 7A,7B est reliée à la partie d'extrémité avant des silencieux de refoulement 8A,8B associés à chacun des réacteurs 5A,5B. Comme on le voit sur les figures 7 à 9, les détails de construction du caisson 6 (ouvertures d'entrée d'air 12 notamment) et des silencieux de refoulement 8A,8B sont identiques à ceux correspondants du premier exemple de réalisation. Cependant, le second exemple de réalisation se distingue essentiellement du premier par le fait que, dans ce cas, le caisson 6 est formé en une seule pièce et que la paroi arrière du caisson, pour permettre alors l'entrée de l'aéronef dans ce dernier et sa sortie de celui-ci, est constituée de deux moitiés 7A,7B solidaires des silencieux 8A,8B, respectivement, et pouvant se déplacer, avec ces derniers, latéralement, c'est-à-dire dans la direction de la double flèche F.

Les moitiés de paroi 7A,7B peuvent se déplacer sur des rails (19) en coopération avec les moyens de roulement 9 dont sont munis les silencieux 8A,8B. La moitié inférieure de la figure 7 représente la position ouverte de la moitié de paroi 7B correspondante permettant l'entrée (ou la sortie) de l'aéronef, tandis que la moitié supérieure de la figure 7 représente la position fermée (position de service) de la moitié de paroi 7A.

Comme déjà indiqué, l'installation selon l'invention permet de limiter au maximum les fuites acoustiques, tout en obtenant une performance acoustique homogène autour de l'installation, et en éliminant les effets du vent, ce qui permet d'effectuer les essais pratiquement par tous les temps, et, compte tenu de l'excellente isolation sonore procurée, même en zone urbaine.

## Revendications

1. Installation d'essais au sol pour les réacteurs d'un aéronef gros-porteur équipé d'au moins deux réacteurs liés aux ailes de l'aéronef, du type comportant, pour chaque réacteur, un silencieux présentant un corps de forme générale cylindrique allongé, lesdits silencieux étant destinés à être disposés, chacun, derrière la tuyère d'un desdits réacteurs,
caractérisée en ce qu'elle comprend un caisson (6) acoustiquement isolant et perméable à l'air, destiné à envelopper au moins la partie avant du fuselage (3) et les ailes (4A,4B) de l'aéronef (2), et dont la paroi arrière (7A,7B) est reliée à la partie d'extrémité avant de chacun desdits silencieux (8A,8B).

2. Installation selon la revendication 1,
caractérisée en ce que ledit caisson (6) est constitué de deux demi-caissons (6A,6B) mobiles l'un par rapport à l'autre pour permettre l'entrée de l'aéronef (2) dans ledit caisson (6) et sa sortie de celui-ci, chacun desdits demi-caissons (6A,6B) étant solidaire d'au moins un silencieux (8A,8B).

3. Installation selon la revendication 2,
caractérisée en ce que lesdits demi-caissons (6A,6B) sont mobiles l'un par rapport à l'autre transversalement à l'axe longitudinal X-X de ladite installation.

4. Installation selon la revendication 2 ou la revendication 3,
caractérisée en ce que le déplacement desdits demi-caissons (6A,6B) est assuré par des roues (9) porteuses et motrices, reliées audit caisson (6), susceptibles de se déplacer sur des rails.

5. Installation selon la revendication 1,
caractérisée en ce que ledit caisson (6) est formé en une seule pièce, et en ce que ladite paroi arrière du caisson (6) est constituée de deux moitiés (7A,7B) de paroi solidaires, chacune, d'au moins un silencieux (8A,8B), et déplaçables latéralement pour permettre l'entrée (ou la sortie) de l'aéronef (2) dans ledit caisson (6).

6. Installation selon l'une quelconque des revendications 1 à 5,
caractérisée en ce que chacun desdits silencieux (8A,8B) est équipé de moyens de roulement (9).

7. Installation selon l'une quelconque des revendications 1 à 6,
caractérisée en ce que les parois du caisson (6) sont constituées de structures en profilés (10), sur lesquels sont fixés des panneaux acoustiquement isolants (11).

8. Installation selon l'une quelconque des revendications 1 à 7,
caractérisée en ce que la paroi avant (13), ainsi que le plafond (14), au moins dans sa partie avant, du caisson (6) comportent une pluralité d'ouvertures (12) facilitant l'entrée dans le caisson (6) de l'air nécessaire à l'alimentation des réacteurs et de l'air entraîné par effet de trompe.

9. Installation selon la revendication 8,
caractérisée en ce que lesdites ouvertures se présentent sous la forme de cheminées (12) rectangulaires ou cylindriques.

10. Installation selon la revendication 8 ou la revendication 9,
caractérisée en ce que des grilles de protection sont prévues pour lesdites ouvertures d'entrée d'air (12).

11. Installation selon l'une quelconque des revendications 1 à 4,
caractérisée en ce que la partie inférieure du caisson (6) est équipée d'un plancher en caillebotis (15).
